# EUROPEAN PATENT APPLICATION

(11) **EP 1 217 593 A2**
(43) Date of publication of application: **26.06.2002**
(21) Application number: 01128860.2
(22) Date of filing: 04.12.2001
(51) Int. Cl.: G08G 1/0968

(54) **Method and apparatus for providing routes using auto ferries and channels**

(30) Priority: 14.12.2000 US 737387
(71) Applicant: Visteon Global Technologies, Inc., Dearborn, Michigan 48126 (US)
(72) Inventor: Zuber, Gary, Santa Clara, California 95051 (US); Hivka, Peter, Richmond, California 94805 (US); Ceylan, Timur, Sunnyvale, California 94086 (US)
(74) Representative: Patentanwälte Dr. Solf & Zapf

(57) **Abstract**

A method for calculating a route in a navigation system is disclosed. A route from a source location to a destination is calculated. The route comprises two or more route segments including at least one route segment crossing a water channel. A notification is generated to indicate existence of the route segment that crosses the water channel. When a route confirmation is received, the calculated route is used. When a route rejection is received, an alternate route is calculated.

## Description

### FIELD OF THE INVENTION

The present invention relates generally to field of vehicle navigation systems. More specifically, the present invention is directed to on-board automobile navigation systems for guiding the driver of an automobile to a desired destination.

### BACKGROUND OF THE INVENTION

An on-board vehicle navigation system can be useful for assisting the driver of an automobile in navigation. An example of an on-board automobile navigation system is a system, which provides the driver with a visual display of a street map of a certain area, using a stored map database, and indicates the position and movement of the vehicle as the vehicle travels. In response to the driver's selecting a destination from the database, the system computes a best route from a starting location to the destination. A built-in sensor measures the movement of the vehicle and record the distance traveled. An electronic signal from the speedometer and software in the vehicle translate the location information into maps and routes. The system provides directional instructions to the driver to guide the driver to the destination. The instructions are given in the form of recorded or synthesized speech.

Automobile navigation systems like the one described above may use a technique known as "dead reckoning" to estimate the position of the vehicle as the vehicle travels. In dead reckoning, the heading of the vehicle and the distance traveled from a previously calculated position are first determined based on data received from on-board sensors (e.g., compass, odometer and GPR receiver). A new position of the vehicle is then estimated by applying the measured parameters to well-known equations. Dead reckoning is subject to certain sources of error, however, which accumulates as the vehicle travels. Therefore, the estimated position of the vehicle is periodically compared to the street map database and GPS position and adjusted to correct for such error. The navigation system may also include a high-accuracy positioning system, such as Global Positioning System (GPS) or the like. The map database is a key component to the reliability of the navigation system. The map database has to be accurate and up-to-date for the system to work properly. The map database usually comes on CD-ROM, DVD, hard disk drive or a microdrive.

The map database generally provides detailed driving information for many areas. In some situations, the destination provided by the driver may require a route that crosses a water channel. Prior art navigation systems fail to provide a route when crossing a water channel is required. These systems may display a route error when the driver requests such a route. The driver in this situation may need to divide the route into two or more route segments, each of which covers only land route. This, however, would not be applicable for a driver who is not able to divide the route into multiple route segments to bypass the water channel problem.

Another approach in the prior art systems is to provide a route that crosses the water channel as if it was a land route. The driver who relies on this approach may be surprised to find out at the last minute that the route crosses a water channel. This approach is dangerous as it may lead the driver into the water when visibility is low.

What is needed to a method to provide better route guidance when the computed route crosses a water channel.

### SUMMARY OF THE INVENTION

A method for calculating a route in a navigation system is disclosed. A route from a source location to a destination is calculated. The route comprises two or more route segments including at least one route segment crossing a water channel. A notification is generated to indicate existence of the route segment that crosses the water channel. When a route confirmation is received, the calculated route is used. When a route rejection is received, an alternate route is calculated.

Other features of the present invention will be apparent from the accompanying drawings and from the detailed description, which follows.

### BRIEF DESCRIPTION OF THE DRAWINGS

The present invention is illustrated by way of example in the following drawings in which like references indicate similar elements. The following drawings disclose various embodiments of the present invention for purposes of illustration only and are not intended to limit the scope of the invention:
**Figure 1** is an exemplary diagram illustrating a route crossing a water channel.
**Figure 2** is an exemplary flow diagram illustrating one embodiment of a ferry route notification.
**Figure 3** is an exemplary ferry route notification.
**Figure 4** is an exemplary ferry route notification and confirmation.
**Figure 5** is an exemplary notification of unavailability of an alternative route.
**Figure 6** is an exemplary notification of travel time of the alternative route.
**Figure 7** is an exemplary notification of a next ferry departure time for a ferry route.
**Figure 8** is an exemplary notification of a ferry schedule and ferry travel time.
**Figure 9** is an exemplary navigation system that can be used with the present invention.

### DETAILED DESCRIPTION

A method for route calculation to a specific destination in a navigation system is described. The route comprises two or more route segments where at least one route segment crosses a water channel. The navigation system comprises a display unit and a selection control mechanism. The method is used to assist a driver or passenger of an automobile equipped with a navigation system, or a user of a portable navigation system (hereinafter, "user") to be aware of the possibility of having to cross a water channel and to provide options to the user to confirm the calculated route or to select an alternate route.

Note that references in this description to "one embodiment" or "an embodiment" do not necessarily refer to the same embodiment; however, neither are such embodiments mutually exclusive, unless so stated, and except as will be readily apparent to those skilled in the relevant art.

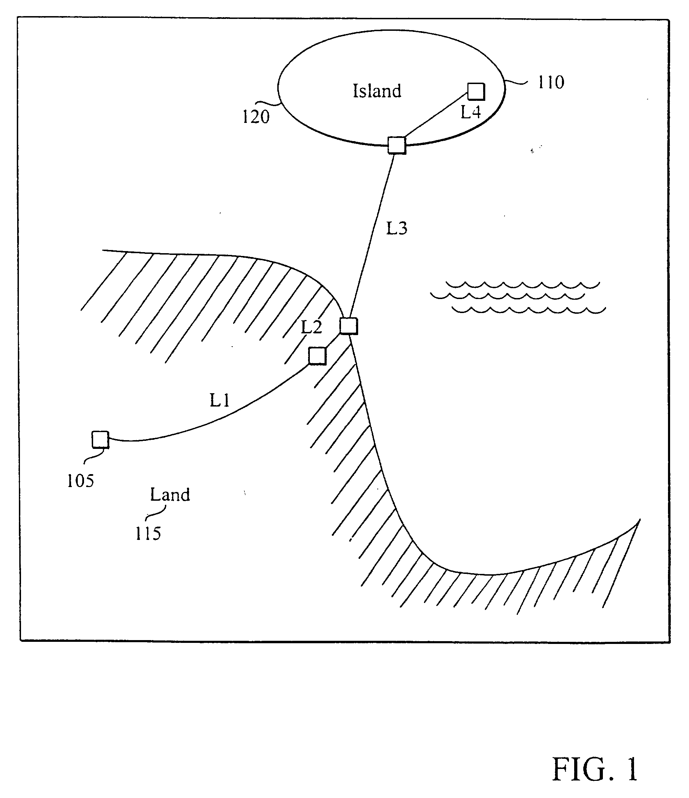

**Figure 1** illustrates an exemplary route that includes a route segment crossing a water channel. The route takes a user from a source location 105 to a destination location 110. The route requires partial land travel and partial travel via waterways or channels. The route includes route segments L1, L2, L3 and L4. The route segment L3 takes the driver from land 115 over a water channel to reach island 120. The route segment L3 crosses a waterway or water channel. The route L3 may be served by a ferry service. Alternatively, the route L3 may require the user to make private water transport arrangement when there is no ferry service. In some situations, the island 120 may also be reached by land. However, this may require the user to travel a much greater distance to reach the destination 110.

The route segment L3 may be referred to as a ferry route when there is ferry service that takes the driver from the land 115 to the island 120. As previously discussed, existing navigation systems typically generate an error notification when the user from the position 105 requests the navigation system to calculate a route to reach the destination 110. Other navigation systems may calculate a route and assume the route segment L3 to be a land route.

Generally, each route segment is associated with a link class. For example, when a route segment is a land route that covers traveling over a long stretch of an interstate highway, that route segment is given a highway link class. A highway link class is associated with a highest speed. Similarly, there is a link class that associates with a route segment using city streets. The speed would be slower in this situation. Each link class is associated with a cost and the navigation system performs route calculation using route segments with the least resistance (e.g., shortest route and fastest route). In one embodiment, a link class is assigned to a route segment that requires taking a ferry. This may require taking ferry schedule and ferry crossing time into consideration.

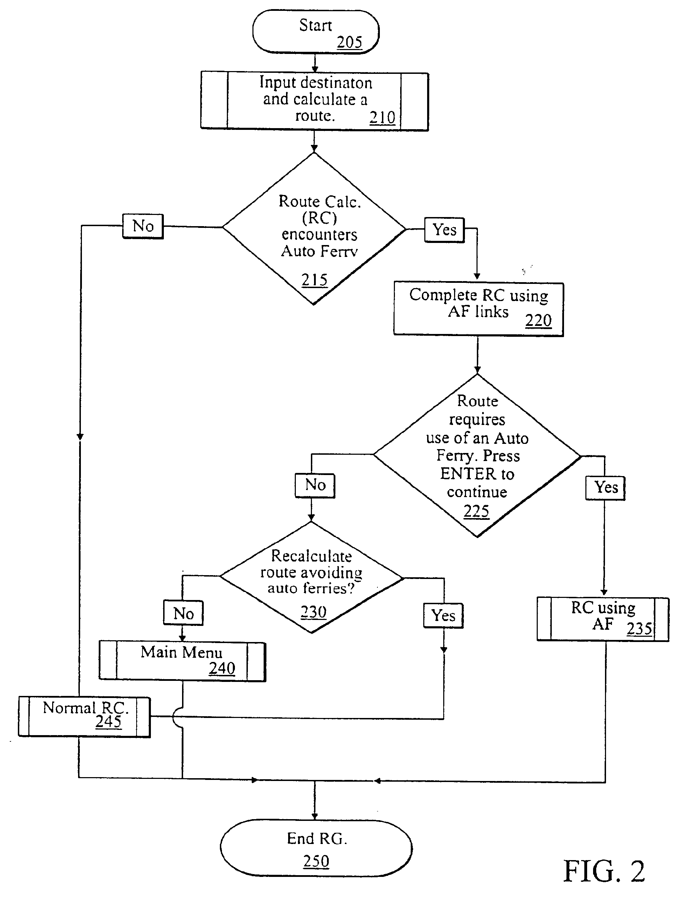

**Figure 2** is an exemplary flow diagram illustrating one embodiment of a process of route calculation. The process starts at block 205. At block 210, the user enters a desired destination and requests the navigation system to calculate a route. Position sensor may be used to determine the user's current position and to allow the navigation system to make a full route calculation. At block 215, a determination is made to see if the full route comprises a route segment having a ferry link class (i.e., route segment that requires taking a ferry to cross a water channel). When the route does not include a route segment having a ferry link class, the process moves from block 215 to block 245 and normal route calculation ("RC") and guidance is performed by the navigation system. The process ends at block 250.

However, when the route includes a route segment that crosses a water channel (e.g., ferry route), the route calculation is completed taking into consideration factors (e.g., ferry crossing time) associated with the auto ferry ("AF") or ferry links, as shown in block 220. At block 225, a ferry route notification is sent to the user. For example, the notification may be an audible (e.g., voice) alert or a text alert displayed in a pop up window. The alert indicates to the user that the calculated route requires the user to cross a water channel. In addition to the notification, the navigation system may provide options to allow the user to accept the calculated route or to reject the calculated route, as shown in block 225. When the user confirms the calculated route and accepts the fact that the user will need to take a ferry, the process moves to block 235 to complete the route calculation. The flow diagram ends at block 250.

From block 225, when the user rejects taking a route that includes a ferry route, an option is made available to the user to see if the user wants the navigation system to calculate an alternate route that does not require taking a ferry, as shown in block 230. When the user wants an alternate route, the flow diagram moves to block 245 where the navigation system calculates a route that does not include a ferry route, if possible. Note that the alternate route may not be the route with the least resistance and it may require the user to drive a much greater distance to reach the same destination as the route that crosses the water channel. In some situations, there is no available alternate route. In this situation, the navigation system may display a route selection error or an alert that indicates the unavailability of an alternate route. Going back to block 230, when the user does not want the navigation system to calculate an alternate route, the flow diagram moves to block 240 which displays the navigation system main menu. The process ends at block 250.

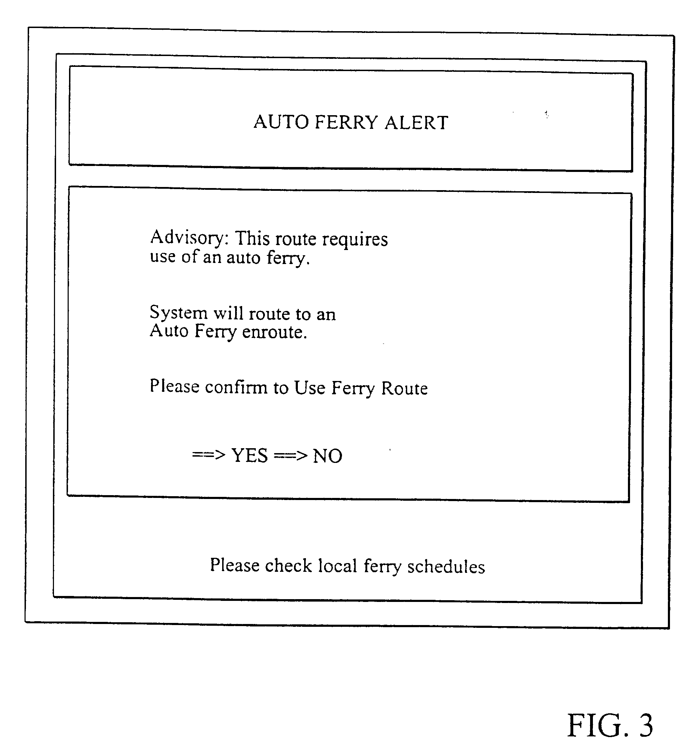

**Figure 3** is an exemplary ferry route notification. In one embodiment, the navigation system may just notify the user of the ferry route segment and continue to complete the route calculation. The navigation system may select a next available ferry departure time based on an estimated arrival time at the ferry gate. The user may view the ferry schedule and choose a different ferry departure time.

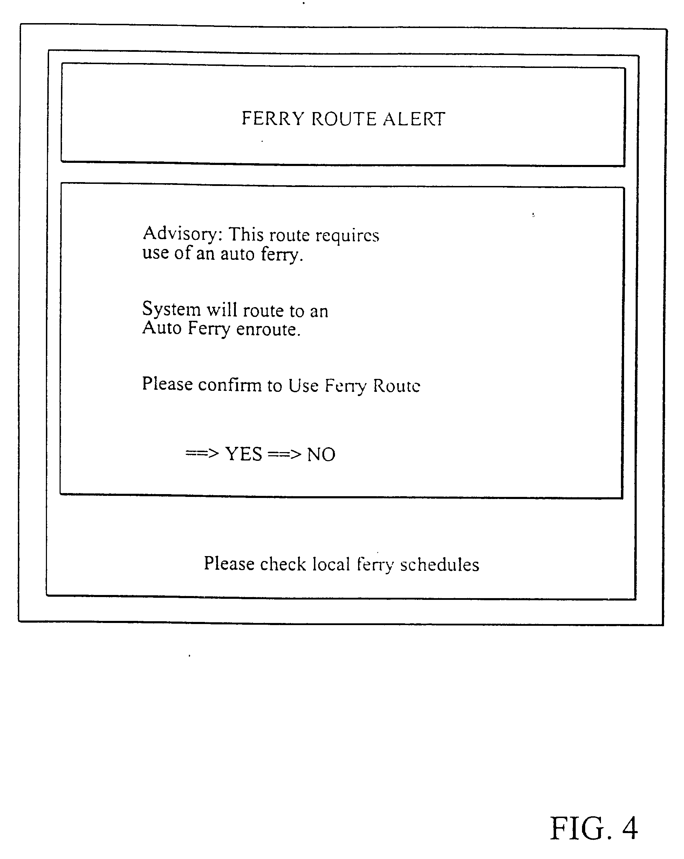

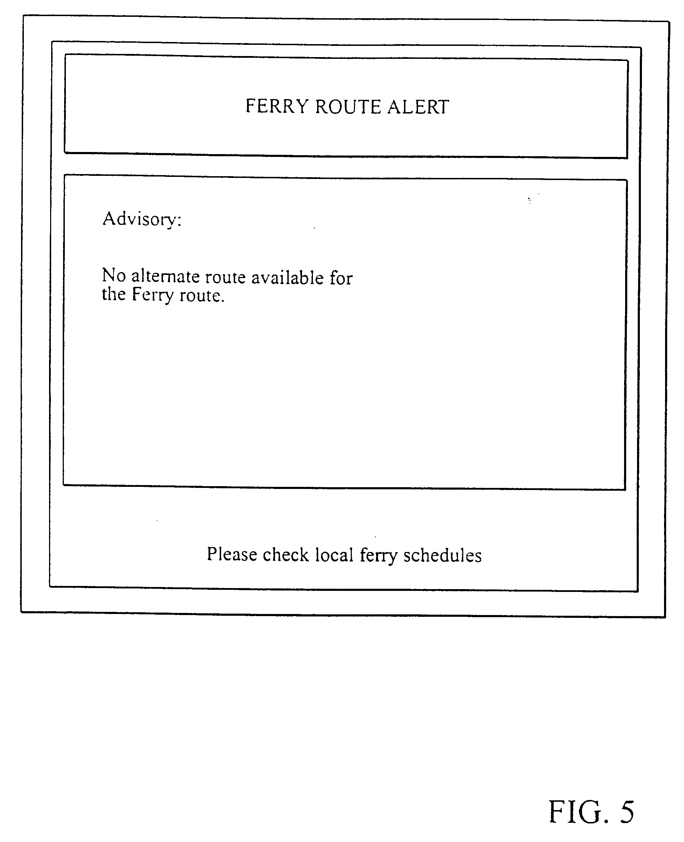

**Figure 4** is an exemplary ferry route notification and confirmation. In one embodiment, in addition to providing the alert, the navigation system may provide the user with an option to accept the route having the ferry route segment or to reject and to request the navigation system to calculate the alternate route. The navigation may not be able to calculate an alternate route, In this case, a notification may be sent to the user to indicate this fact. **Figure 5** is an exemplary notification of unavailability of the alternate route.

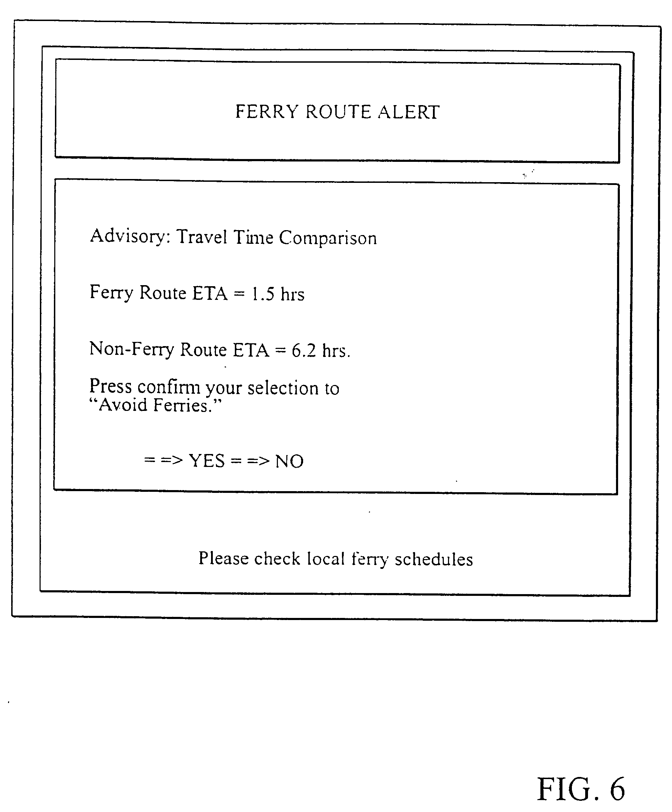

When an alternate route is available, it may require the user to travel longer than the route having the ferry route segment. In one embodiment, a notification is sent to the user to indicate this difference in time and/or in travel distance. **Figure 6** is an exemplary notification of travel time of the alternate route. In another embodiment, the user is given an opportunity to go back and accept the route having the ferry route segment. For example, as illustrated in Figure 6, the user may decline the alternate route after recognizing that the alternate route may not be as efficient. When the user rejects the alternate route, the system may resume the route calculation using the ferry route segment. In another embodiment, the navigation system may return to its main menu and wait for another destination from the user.

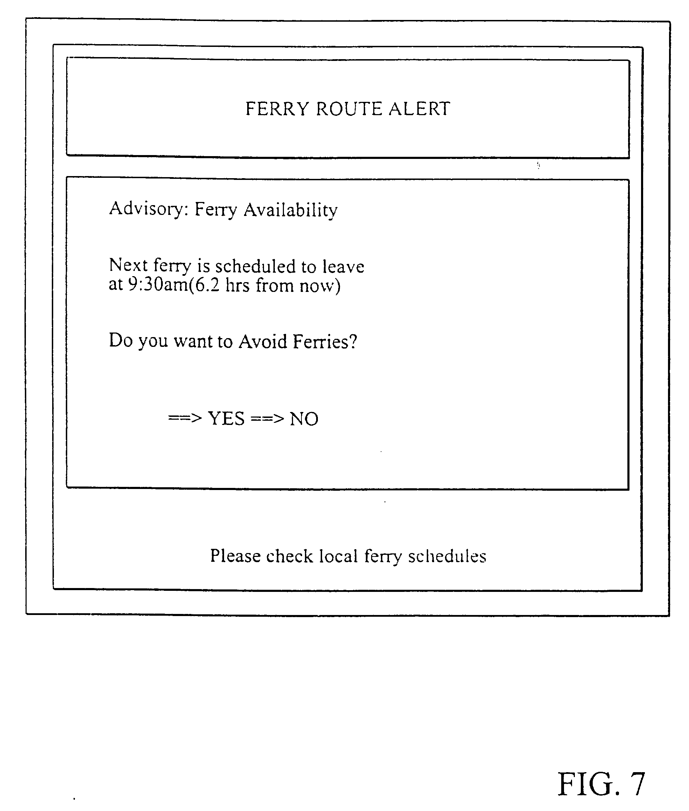

**Figure 7** is an exemplary notification of a next ferry departure time for a ferry route. In one embodiment, the user may have confirmed the route having a ferry route segment at an earlier time only to find out that the ferry service is disrupted when the user arrives at the ferry gate. The ferry disruption may have been caused by, for example, change in weather condition or labor strike. The disrupted service may arise because the user got caught in unexpected traffic delay and arrived at the ferry gate after the last ferry of the evening has already left. In this situation, the navigation system may alert the user of the length of time the user may have to wait until the ferry service is resumed, as illustrated in **Figure 7.** The navigation system may then ask if the user wants it to calculate an alternate route.

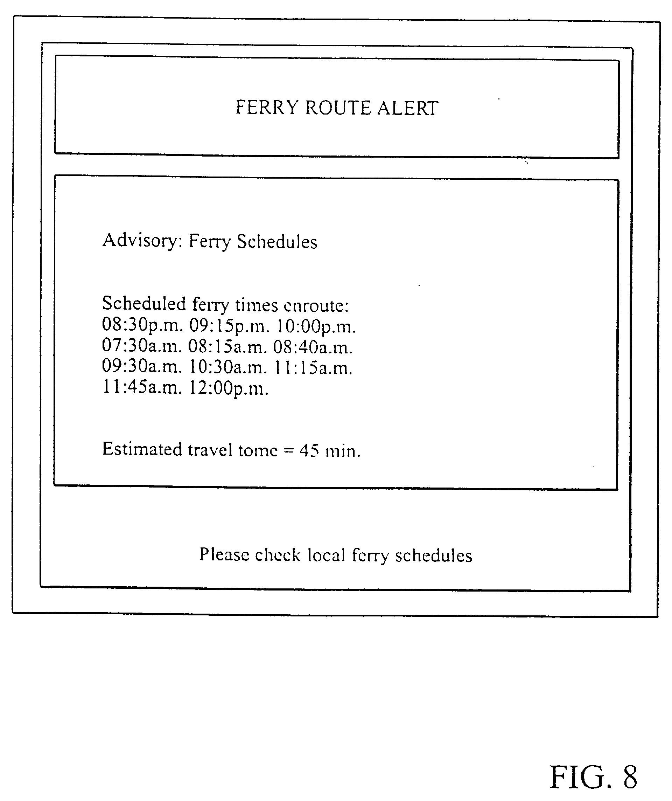

**Figure 8** is an exemplary notification of a ferry schedule and ferry travel time. In one embodiment, the navigation system may provide the user with the ferry schedule to allow the user an opportunity to modify the ferry route segment. For example, the user may want to be aware of the other ferry departure times to avoid missing the last ferry. The user may also want to be aware of the other ferry departure times just in case the user wants to deviate slightly from the calculated route for last minute businesses.

Those skilled in the art will recognize that the method of the present invention may help users who are intimidated with having travel across a water channel. The method may also provide an efficient route to help guiding users across a water channel to reach a destination when existing navigation systems do not provide such routes. The method may also be used to cross from one country to anther country using different methods of water transportation such as, for example, underwater tunnel, floating bridges, etc.

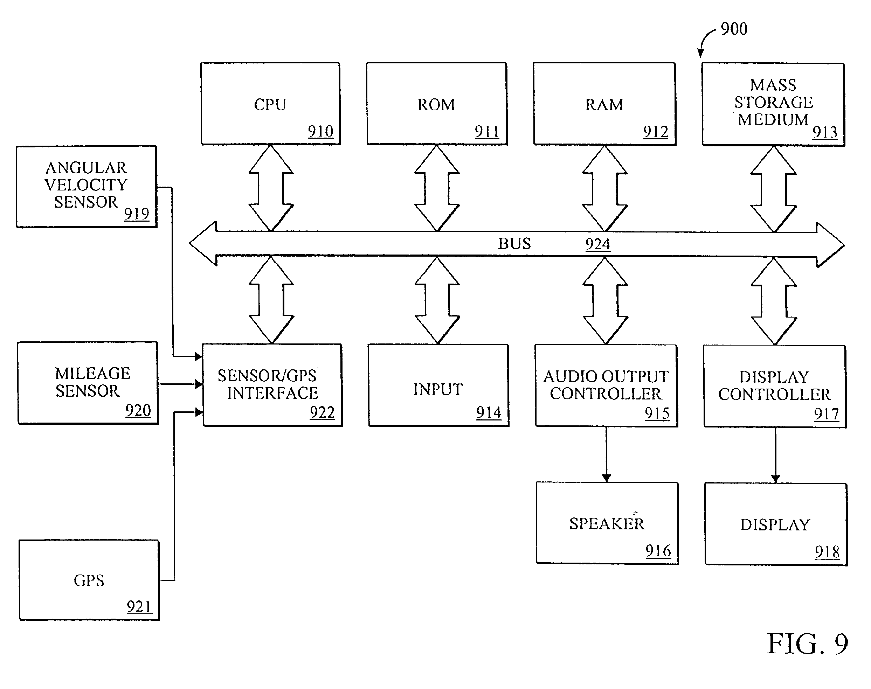

**Figure 9** illustrates a navigation system, in which the present invention can be implemented. Generally, the system 900 provides a visual display of a street map of a geographic area and an indication of the position and movement of the vehicle. In response to the user's inputting a desired destination, the system computes a best route from a starting location to the destination and then provides navigation instructions to the driver to guide the driver to the destination. In one embodiment, the user selects the destination from a list of possible destinations provided by the system 900. The navigation instructions are provided in the form of digitized or synthesized speech. The instructions can also be provided visually in an alternate display mode, in which the next maneuver is indicated in the form of an arrow symbol and/or text.

The system 900 includes a central processing unit (CPU) 910, read-only memory (ROM) 911, random access memory (RAM) 912, and a mass storage medium 913, all coupled together by a bus 924. The CPU 910 controls operation of the system 900 by executing instructions stored in ROM 911, RAM 912, or both. For example, instructions stored in ROM 911 may be copied to RAM 912 for execution by the CPU 910. RAM 912 may include static RAM (SRAM), which receives power from the vehicle's battery to maintain its stored data when the vehicle's engine is off. ROM 911 is non-volatile memory, some or all of which may be erasable and/or reprogrammable. For example, ROM 911 may be flash memory, electrically erasable programmable ROM (EEPROM), or any other suitable form of programmable-erasable non-volatile memory. Mass storage medium 913 may comprise a magnetic, optical, or other form of non-volatile storage device suitable for storing large quantities of data.

The system 900 also includes several sensors 919, 920, and 921 to provide data for purposes of dead reckoning. In particular, the system 900 includes an angular velocity sensor 919, a mileage sensor (e.g., an odometer) 920, and a Global Positioning System (GPS) locator 921. Each of sensors 919-921 is coupled to an interface 922, which is coupled to the bus 924. Interface 922 includes various circuitries for interfacing sensors 919-921 to the bus 924, such as analog-to-digital converters. The system 900 also includes an input unit 914 that is coupled to the bus 924. The input unit 914 includes various controls such as buttons (which may be mechanical in nature) by which the user can enter commands and data into the system 900, such as when selecting a destination or various output options. The system 900 outputs digitized or synthesized audio navigation instructions to the user via a speaker 916. The speaker 916 is coupled to the bus 924 via an audio output controller 915. A visual display is provided to the user via a display device 918 that is coupled to the bus 924 by a display controller 917. The display device 918 may be a liquid crystal display (LCD), a cathode ray tube (CRT), or any other suitable form of display device.

The system 900 uses "dead reckoning" in combination with a map-matching algorithm to accurately determine the position of the vehicle on roads of a street map. The street map is provided by a stored map database. Mass storage medium 913 stores the map database containing land segments (e.g., streets, highways, etc.) and ferry segments for a given geographic area. Those skilled in the art will recognize that other alternatives may be used to implement the route segments associated with ferry link without departing from the scope of the present invention. Operation of the navigation system, including the ferry route segment method described herein, may be an implemented using software, e.g., by instructions stored in ROM 911, RAM 912, or mass storage device 913 (or a combination thereof) and executed by CPU 910. Alternatively, certain operations, including the ferry route segment method, may be implemented using only hardwired circuitry.

From the above description and drawings, it will be understood by those of ordinary skill in the art that the particular embodiments shown and described are for purposes of illustration only and are not intended to limit the scope of the invention. Those of ordinary skill in the art will recognize that the invention may be embodied in other specific forms without departing from its spirit or essential characteristics. References to details of particular embodiments are not intended to limit the scope of the claims.

## Claims

1. In a navigation system, a method comprising:
calculating a route from a source location to a destination location, the calculated route comprising two or more route segments, at least one route segment crossing a water channel; and
generating a notification to indicate existence of the route segment that crosses the water channel.

2. The method of claim 1, further comprising generating a notification to indicate unavailability of an alternate route when no alternate route is available, wherein the alternate route does not comprise a route segment crossing the water channel.

3. The method of claim 2, wherein when the alternate route is available, travel information related to taking the alternate route is provided.

4. The method of claim 1, wherein a ferry service is used to cross the water channel.

5. The method of claim 4, wherein travel information related to taking the ferry service is provided.

6. The method of claim 5, wherein the travel information related to taking the ferry service comprises ferry travel time and ferry schedule.

7. A navigation system, comprising:
a processor;
a first storage unit coupled with the processor, the first storage unit having a map database comprising data representing water-crossing route segments;
a second storage unit coupled with the processor, the second storage unit having computer instructions stored therein which, when executed by the processor, cause the processor to:
calculate a route from a source location to a destination location, the calculated route comprising two or more route segments, at least one route segment is a water-crossing route segment; and
generate a notification to indicate existence of the water-crossing route segment.

8. The system of claim 7, wherein the instructions further cause the processor to generate a notification to indicate unavailability of an alternate route when no alternate route is available.

9. The system of claim 8, wherein when the alternate route is available, travel information related to taking the alternate route is provided.

10. The system of claim 7, wherein a ferry service is used to cross the water channel.

11. The system of claim 10, wherein travel information related to taking the ferry service is provided.

12. The system of claim 11, wherein the travel information related to taking the ferry service comprises ferry travel time and ferry schedule.

13. An apparatus, comprising:
means for storing a map database comprising route segments associated with a ferry link;
means for performing a route calculation to find a route comprising at least one route segment associated with the ferry link; and
means for providing route guidance using the route after generating an alert to indicate that the route comprise the route segment associated with the ferry link.

14. The apparatus of claim 13, further comprising means for providing an option to confirm the route and an option to reject the route.

15. The apparatus of claim 14, where in the means for providing the option to reject the route further comprises means for calculating an alternate route.

16. A method, comprising:
calculating a first route based on a destination from a current position of a user, the first route comprising a route segment associated with a ferry link class, wherein a ferry link class is assigned to a route that requires taking a ferry across a water channel;
alerting the user that the first route requires taking the ferry;
providing the user an option to confirm the first route and an option to reject the first route;
guiding the user to the destination using the first route when the user confirms the first route; and
calculating a second route which does not include a route segment associated with the ferry link class when the user rejects the first route.

17. The method of claim 16, further comprising generating a notification to the user to indicate unavailability of the second route when no second route is available.

18. The method of claim 17, wherein calculating the second route comprises:
calculating a travel information related to taking the second route, and
notifying the user travel information related to the second route.

19. The method of claim 17, wherein guiding the user to the destination using the first route comprises notifying the user ferry travel time and ferry schedule.

20. A computer readable medium having stored thereon sequences of instructions which are executable by a digital processing system, and which, when executed by the digital processing system, cause the system to perform a method comprising:
calculating a route from a source location to a destination location, the calculated route comprising two or more route segments, at least one route segment crossing a water channel, the destination location entered by a user; and
generating a notification to the user to indicate existence of the route segment that crosses the water channel.
